# EUROPÄISCHE PATENTSCHRIFT

(11) **EP 3 445 695 B1**
(45) Veröffentlichungstag und Bekanntmachung des Hinweises auf die Patenterteilung: **08.01.2020**
(21) Anmeldenummer: 17720400.5
(22) Anmeldetag: 20.04.2017
(51) Int. Cl.: B65H 75/44, F16G 13/16, H02G 3/04, H02G 11/02

(54) **LEITUNGSFÜHRUNGSSYSTEM FÜR MINDESTENS EINE AUF- UND ABSPULBARE VERSORGUNGSLEITUNG SOWIE DREHFÜHRUNG HIERFÜR**
ROUTING SYSTEM FOR AT LEAST ONE SUPPLY LINE WHICH CAN BE COILED AND UNCOILED, AND ROTARY GUIDE THEREFOR
SYSTÈME DE GUIDAGE DE LIGNE POUR AU MOINS UNE LIGNE D'ALIMENTATION POUVANT ÊTRE BOBINÉE ET DÉVIDÉE AINSI QUE GUIDAGE ROTATIF ASSOCIÉ

(30) Priorität: 20.04.2016 DE 202016102087 U
(43) Veröffentlichungstag der Anmeldung: 27.02.2019
(73) Patentinhaber: Igus GmbH, 51147 Köln (DE)
(72) Erfinder: THEISS, Georg, 50678 Köln (DE)
(74) Vertreter: Lippert Stachow Patentanwälte Rechtsanwälte
(86) Internationale Anmeldenummer: PCT/EP2017/059422
(87) Internationale Veröffentlichungsnummer: WO 2017/182583

(56) Entgegenhaltungen:
- EP-A1- 2 535 303
- EP-A1- 2 549 144
- WO-A1-98/31950
- WO-A2-2011/086198
- DE-A1- 2 024 993
- DE-A1-102012 110 967
- DE-U1-202014 103 274
- DE-U1-202015 100 472

## Beschreibung

Die Erfindung betrifft allgemein ein Leitungsführungssystem für mindestens eine auf- und abspulbare Leitung sowie eine Drehführung einer Leitung zwischen zwei relativ zueinander drehbaren Punkten.

Die Erfindung betrifft insbesondere ein Leitungsführungssystem für eine oder mehrere Leitungen mit einer trommelartigen Wickelvorrichtung zum Auf- und Abspulen der Leitungen, bspw. Kabeln, Schläuchen oder dergleichen, wobei die Wickelvorrichtung anhand einer Welle um eine Drehachse drehbar ist. Das Leitungsführungssystem umfasst weiterhin eine Drehführung zur Führung der Leitung(en) von einem ersten Punkt, typischerweise einem unbeweglichen Festpunkt, zu einem mit der drehbaren Wickelvorrichtung drehfest verbundenen zweiten Punkt, d.h. einem Punkt, welcher relativ zum ersten Punkt drehbar ist. Die Drehführung weist hierbei einen wendelförmigen Verlauf auf, mit einer oder mehreren ersten Wendellagen, in welchen die Leitung(en) schraubenartig um die Drehachse gewunden ist/sind, einer oder mehreren zweiten Wendellagen, in welchen die Leitung(en) gegensinnig zum Drehsinn der ersten Wendellagen ebenfalls schraubenartig um die Drehachse gewunden ist/sind sowie mit einem Umlenkbogen, welcher beide gegensinnig gewundenen Wendellagen miteinander verbindet, wobei die Leitung(en) im Umlenkbogen umgeschlagen ist/sind.

Der besondere Wendelverlauf mit Umschlag der Leitung(en) zwischen den beiden wendelförmigen Trumen ermöglicht eine Relativdrehung des zweiten Punkts gegenüber dem ersten Punkt über einen großen Drehwinkel, beispielsweise von mehreren tausend Grad, ohne dass typische Drehdurchführungen erforderlich wären. So können bspw. Schleifkontakte für elektrische Leitungen und/oder Drehkupplungen für Schlauchleitungen zur Versorgung mit gasförmigen oder flüssigen Medien vermieden werden.

Ein Leitungssystem dieser Gattung ist bereits bekannt aus dem deutschen Patent DE 10 2012 110 967. Diese Lösung erlaubt es ohne typische Drehdurchführungen, mehrere Leitungen, auch für verschiedene Medien (Strom, Daten, Gas, Flüssigkeit, usw.) und mit unterschiedlichem Durchmesser anhand einer einzigen Trommel auf-und abzuspulen. Diese Bauweise ist dabei u.a. auch platzsparend. Zur Vermeidung der typischen Drehdurchführungen für die Leitungen wird bei dieser Lösung bspw. eine besondere Drehführung verwendet, z.B. gemäß der internationalen Patentanmeldung WO 2011/086198 A2 mit einer bandartigen Leitungsführungseinrichtung, welche die Leitungen gemäß dem gewünschten wendelförmigen Verlauf führt. Der besondere wendelförmige Verlauf mit gegenläufigen Wendeln bzw. Windungen und dazwischen angeordnetem Umschlag erlaubt es, durchgehende Leitungen einzusetzen, d.h. typische Drehdurchführungen zu vermeiden.

Verschiedene nach dem Prinzip aus der DE 10 2012 110 967 A1 aufgebaute Systeme werden unter der Handelsbezeichnung "e-spool" von der Anmelderin (igus GmbH, D-51147 Köln) vertrieben. Diese Leitungsführungssysteme haben sich in der Praxis bereits bewährt. Eine Beschränkung in der Anwendbarkeit dieser Systeme besteht darin, dass nur relativ kleine Leitungsdurchmesser, bspw. bis etwa 20mm, eingesetzt bzw. keine Leitungen mit hohem spezifischen Gewicht (Masse pro Längeneinheit) geführt werden können.

Ein Leitungsführungssystem gemäß dem Oberbegriff des Anspruchs 1 ist aus der EP 2 535 303 A1 bekannt.

Eine erste Aufgabe der vorliegenden Erfindung liegt mithin darin, ein Leitungsführungssystem und eine Drehführung der eingangs genannten Art so weiterzubilden, dass diese auch für Leitungen mit großen Leitungsquerschnitten oder auch für Leitungen mit hohem spezifischen Gewicht verwendbar sind.

Diese Aufgabe wird einerseits durch ein Leitungsführungssystem mit den Merkmalen nach Anspruch 1 gelöst und - unabhängig hiervon - ebenfalls durch eine Drehführung mit den Merkmalen nach Anspruch 16 oder Anspruch 17. Vorteilhafte Weiterbildungen ergeben sich aus den Unteransprüchen.

Bei einem gattungsgemäßen Leitungsführungssystem nach dem Oberbegriff aus Anspruch 1 wird die erste Aufgabe insbesondere dadurch gelöst, dass die Drehführung zum Abstützen der Wendellagen, insbesondere in Richtung radial nach außen und/oder in Richtung radial nach innen, eine äußere rohrförmige Stützhülse und/oder eine innere rohrförmige Stützhülse aufweist. Die Stützhülse(n) ist/sind dabei koaxial zur Drehachse der trommelartigen Wickelvorrichtung angeordnet. Erfindungsgemäß ist dabei weiterhin vorgesehen, dass die Drehführung eine Funktion zur Drehentkopplung aufweist, aufgrund welcher an der jeweiligen Stützhülse abgestützte bzw. daran im Anschlag anliegende Wendeln bzw. Wendellagen von der Drehung der Wickelvorrichtung entkoppelt bzw. unabhängig um die Drehachse drehbar sind. Mit anderen Worten, an der Stützhülse abgestützte Wendeln bzw. Windungen sollen jeweils unabhängig von der Drehbewegung der trommelartigen Wickelvorrichtung um die Drehachse drehbar sein. Hierdurch wird erreicht, dass einige oder alle erste Wendellagen bzw. einige oder alle zweite Wendellagen zwar ggf. an der Drehung der Wickelvorrichtung teilnehmen können, jedoch nicht zwingend die gleiche Drehbewegung ausführen müssen.

Ohne eine entsprechende Entkopplung der Drehbewegung können, bedingt durch den während des Drehbewegungsablaufs veränderlichen Radius der Wendeln, durch Kontakt an angrenzenden Bauteilen - wie beispielsweise einer Antriebswelle der Wickelvorrichtung - sehr hohe Reibungskräfte entstehen. Radial nach innen würde dies ein Einschnüren und, bspw. aufgrund tangentialer Haftreibungskräfte, sehr hohe Zugspannungen verursachen. Versuche zeigten, dass dieses Phänomen insbesondere bei Leitungen mit großem Querschnitt oder hohem spezifischen Gewicht sehr ausgeprägt ist. Es kann ggf. zur Zerstörung der Leitung bzw. einem Blockieren der gewünschten Drehbewegung führen. In der entgegengesetzten Drehrichtung kann das entsprechende Problem durch ein Aufspannen bzw. Aufbäumen radial nach außen entstehen, da der Durchmesser der Wendeln bzw. Windungen sich tendenziell vergrößert.

Aufgrund der Verwendung mindestens einer abstützenden Hülse sowie deren Entkopplung von der Drehung der trommelartigen Wickelvorrichtung lässt sich die vorstehend erläuterte unerwünschte Beanspruchung zumindest in eine Radialrichtung zuverlässig vermeiden, da verursachende Reibung zwischen den relevanten relativbeweglichen Bestandteilen stark reduziert oder ganz vermieden wird.

Die Drehführung kann insbesondere so ausgeführt sein, dass diese die Wendellagen durch geeignete Bauteile in alle Raumrichtungen führt. So kann die bestimmungsgemäße relative Drehbewegung auf die jeweiligen Wendellagen und den Umlenkbogen übertragen werden, ohne unerwünschtes Verhaken bspw. durch Aufbäumen oder ohne Klemmen bspw. durch Einschnüren.

Je nach Bauweise ist eine entsprechend entkoppelte Radialabstützung nur innen, nur außen oder aber beidseitig erforderlich. Dies ist z.B. abhängig davon, ob die Leitung freiliegend in der Drehführung geführt ist, oder eine geeignete Leitungsführungseinrichtung innerhalb der Drehführung genutzt wird.

Ein wesentlicher Vorteil der erfindungsgemäßen Anordnung ist, dass nunmehr auch besonders schwere Leitungen, bspw. Starkstromkabel zur Landstromversorgung von Hochseeschiffen, nach dem gattungsgemäßen Prinzip, d.h. ohne typische Drehdurchführung anhand von Schleifkontakten oder dergleichen, anhand einer trommelartigen Wickelvorrichtung auf- und abgespult werden können.

Ungeachtet einer Trommelanwendung zum auf- und abspulen der gewünschten Leitungslänge vermeidet die ebenfalls vorgeschlagene Drehführung auch bei schweren Leitungen oder Leitungen großen Durchmessers die Notwendigkeit typischer Drehdurchführungen, d.h. auch solche Leitungen können nun unterbrechungsfrei zwischen zwei relativ zueinander drehbaren Punkten durchgehen.

Insbesondere bei frei geführten Leitungen (d.h. ohne eine diese aufnehmende Leitungsführungseinrichtung wie bspw. eine Energieführungskette) sieht eine Ausführungsform vor, dass eine innere rohrförmige Stützhülse vorgesehen ist, welche zwecks Drehentkopplung mittels einer geeigneten Drehlagerung relativ zur Wickelvorrichtung drehbar ist, insbesondere um die Drehachse letzterer.

Ergänzend oder alternativ kann eine äußere rohrförmige Stützhülse vorgesehen sein, welche zum Zweck der Drehentkopplung gegenüber der Wickelvorrichtung, mittels einer Drehlagerung relativ zur Wickelvorrichtung und insbesondere um deren Drehachse drehbar ist.

In einer Ausführungsform sind beide Stützhülse einzeln oder gemeinsam in Bezug auf die Drehung der Wickelvorrichtung frei drehbar bzw. schwimmend gelagert.

Neben freier Drehbarkeit der vorgesehenen Stützhülse(n) gegenüber der Wickelvorrichtung durch geeignete Drehlagerung, bspw. mittels Wälzlager an einer Welle, liegen andere konstruktive Möglichkeiten, die Funktion der Drehentkopplung zu realisieren, im Rahmen der Erfindung. Bspw. können die Stützhülsen eine Mehrzahl umfänglich verteilter Stützrollen (ähnlich wie Rollenförderer oder Rollenbahnen) aufweisen, an welchen radial nach innen oder radial nach außen spannende Wendellagen möglichst reibungsfrei abrollen können.

Eine Anordnung mit einer inneren und einer äußeren Stützhülse, welche jeweils frei um die Drehachse drehbar sind, ist insbesondere dann vorteilhaft, wenn die Leitung in der Drehführung freiliegend geführt ist. Dabei kann die Leitung je nach Drehrichtung unmittelbar an der äußeren bzw. an der inneren Stützhülse anliegen und dort abgestützt sein. Falls die Leitung(en) hingegen in einer zusätzlichen Leitungsführungseinrichtung, bspw. einer geeignet gestalteten Energieführungskette, geführt wird/sind, bieten sich - wie unten erläutert - weitere Möglichkeiten, die funktionale Drehentkopplung zu realisieren.

Insbesondere, aber nicht ausschließlich, bei freiliegend geführten Leitungen sieht eine Ausführungsform vor, dass die Drehführung einen um die Drehachse gebogenen Stützkörper zur Unterstützung des Umlenkbogens umfasst. Der Stützkörper hat dabei einen in Umfangsrichtung bzw. tangential gerichteten Umlenkbereich, der an den gewünschten Verlauf, insbesondere an den Radius, des Umlenkbogens zwischen den Wendellagen angepasst ist. Der Stützkörper ist dabei relativ zu der bzw. den vorgesehenen Stützhülsen frei drehbar angeordnet. Der Stützkörper kann insbesondere mit der Hälfte der Umdrehungsgeschwindigkeit der Wickelvorrichtung umlaufen.

Ein entsprechender Stützkörper ist vorzugsweise zwischen einer radial inneren und einer radial äußeren Stützhülse axial verschieblich geführt, insbesondere gleitend gelagert. So können u.a. unerwünschte Radialbewegungen des Stützkörpers unter Beibehaltung der axialen Beweglichkeit eingeschränkt bzw. verhindert werden.

Je nachdem, ob die Leitung freiliegend oder in einer zusätzlichen Leitungsführungseinrichtung innerhalb der Drehführung geführt ist, weist der Stützkörper vorzugsweise zumindest an seinem Umlenkbereich, ggfs. auch an daran anschließenden Laufflächen, eine durchgehende Gleitfläche zur Reibungsverminderung auf. Alternativ oder ergänzend hierzu können zusätzlich zumindest am Umlenkbereich des Stützkörpers auch Führungsrollen zur Reibungsverminderung vorgesehen werden.

Der Stützkörper gewährleistet einerseits die gewünschte Krümmung im Umlenkbereich bzw. im Umschlag zwischen den gegensinnig liegenden Wendellagen und andererseits einen hinreichenden Abstand zur Reibungsvermeidung zwischen beiden. Der Stützkörper kann ebenfalls dazu eingesetzt werden, ein Aufspannen bzw. Aufbäumen der Wendellagen radial nach außen zu reduzieren oder zu verhindern, und ggf. hierzu zusätzliche Führungsteile aufweisen.

Eine weitere Möglichkeit, die Funktion der Drehentkopplung zu realisieren, besteht darin, dass die Drehführung eine geeignet gestaltete Leitungsführungseinrichtung umfasst, in welcher die Leitung(en) entsprechend dem gewünschten wendelförmigen Verlauf mit Umschlag geführt ist. Dabei kann die Leitungsführungseinrichtung zum Zwecke der erfindungsgemäßen Drehentkopplung geeignet angeordnete Stützrollen aufweisen, welche bspw. an der einen oder an beiden Stützhülsen in Betriebsstellung abrollen können.

In einer solchen Ausführungsform kann die Leitungsführungseinrichtung als Energieführungskette mit schwenkbar verbundenen Kettengliedern ausgeführt sein. Die Schwenkachse liegt dabei im Betriebszustand jeweils vorzugsweise möglichst radial zur Drehasche. Die Kettenglieder haben jeweils zumindest eine innere Seitenlasche, eine äußere Seitenlasche sowie einen beide fest verbindenden Quersteg. Je nachdem, ob vorrangig ein Einschnüren radial nach innen, ein Aufbäumen radial nach außen oder der doppelte Effekt vorliegt, kann zwecks Drehentkopplung eine der nachfolgenden Möglichkeiten oder die Kombination beider vorgesehen werden. Einerseits kann zumindest an einigen der inneren Seitenlaschen jeweils eine radial nach innen gerichtete Stützrolle vorgesehen werden. Derartige Stützrollen entkoppeln die Drehbewegung durch Abrollen an der inneren Stützhülse oder bspw. unmittelbar an einer Welle der Wickelvorrichtung bzw. vermeiden eine Haftreibung. Andererseits kann analog zumindest an einigen der äußeren Seitenlaschen der Energieführungskette jeweils eine radial nach außen gerichtete Stützrolle vorgesehen werden. Derartige Stützrollen können dann insbesondere an einer radial außen vorgesehenen Stützhülse abrollen. Bei Verwendung einer Energieführungskette mit Stützrollen ist die Drehbewegung vorgesehener Stützhülsen grundsätzlich unerheblich, d.h. diese können bspw. an der Drehung des zweiten Punkts teilnehmen und/oder zum ersten Punkt drehfest sein.

Bei Verwendung einer Leitungsführungseinrichtung innerhalb der Drehführung bildet diese zweckmäßig den gewünschten Verlauf der Wendellagen und ist entsprechend gestaltet diesen Verlauf weitgehend vorzugeben. Die Leitungsführungseinrichtung kann für sich genommen bereits die unerwünschten Effekte des Einschnürens bzw. des Aufspannens vermindern.

Eine mögliche Ausführungsform einer Energieführungskette zur Bildung des wendelförmigen Verlaufs hat zumindest einen radial äußeren Laschenstrang mit den äußeren Seitenlaschen, der in Längsrichtung eine größere Länge aufweist, als ein radial innerer Laschenstrang mit den inneren Seitenlaschen. Dies kann beispielsweise nach Art eines Baukastenprinzips dadurch realisiert werden, dass jeweils spiegelsymmetrische oder identische Seitenlaschen in den Laschensträngen verwendet werden, wobei jedoch im längeren, äußeren Laschenstrang jeweils zwischen zwei Paaren schwenkbar verbundener Seitenlaschen mindestens ein zusätzliches Zwischenstück vorgesehen ist. Durch die Anzahl der Zwischenstücke kann die gewünschte Verlängerung in Längsrichtung eingestellt werden. Ebenso kann bspw. eine Energieführungskette mit mehrfacher Unterteilung durch einen zusätzlichen Mittelstrang vorgesehen werden, wobei die Anzahl der Zwischenstücke radial nach außen zunimmt.

Ungeachtet der gewählten Führung der Leitung(en) in der Drehführung können die nachfolgend erläuterten bevorzugten Merkmale vorgesehen werden.

In einer Ausführungsform kann die Drehführung endseitig einen ersten scheibenförmigen Flansch aufweisen. An diesem ersten Flansch kann der erste Punkt ortsfest angeordnet sein. Analog kann am gegenüberliegenden Stirnende der Drehführung ein zweiter scheibenförmiger Flansch vorgesehen sein, welcher drehfest mit der trommelartigen Wickelvorrichtung verbunden ist. Somit kann an diesem zweiten Flansch der zweite Punkt angeordnet werden. Jede erfindungsgemäß vorgesehene Stützhülse ist dabei bezüglich beider Endflansche frei drehbar angeordnet. Die scheibenförmigen Flansche dienen zur Abstützung bzw. als Anschlag in Axialrichtung.

Zum Drehantrieb der Wickelvorrichtung kann insbesondere eine ausgeprägte Welle vorgesehen sein. In diesem Fall können erfindungsgemäß vorgesehene Stützhülsen anhand einer geeigneten Drehlagerung, bspw. eines Wälzlagers, frei drehbar an der ohnehin vorgesehenen Welle gelagert werden. Dies gewährleistet inhärent die koaxiale Anordnung der Bauteile. Die Wickelvorrichtung kann auch auf einer der Stützhülsen drehbar angeordnet sein.

Die Wickelvorrichtung des Systems kann insbesondere als Trommel mit einer auf dieser spiralig aufgewickelten Energieführungskette, welche den auf- und abspulbaren Längsabschnitt der Leitung(en) führt, ausgeführt sein.

Ein besonderes Merkmal des vorgeschlagenen Leitungsführungssystems besteht darin, dass die Leitung unterbrechungsfrei durchgehend ausgeführt sein kann und zwar vom raumfesten Verbindungspunkt hin bis zum abspulbaren freien Ende. Mithin kann die durchgehende Leitung einen ersten Teilabschnitt aufweisen, welcher auf der Wickelvorrichtung auf- bzw. abgewickelt wird und ein entsprechend auf- und abspulbares freies Ende hat. Ein zweiter Abschnitt der Leitung mit dem wendelförmigen Verlauf ist in der Drehführung aufgenommen und umfasst das ortsfest am ersten Punkt anzuschließende Ende der Leitung. Somit kann jede geführte Leitung vom ersten Punkt über den zweiten Punkt an der trommelartigen Wickelvorrichtung bis hin zum auf- und abspulbaren freien Ende unterbrechungsfrei durchgehen (ohne Drehverbinder). Dies erweist sich insbesondere bei schweren Stromversorgungskabeln, wie bspw. Mehrphasen-Starkstromkabeln zur Landstromversorgung von Schiffen als vorteilhaft.

Je nach spulbarer Leitungslänge und Leitungsquerschnitt baut das erfindungsgemäße Leitungsführungssystem typischerweise erheblich größer als Systeme gemäß dem in der Einleitung diskutierten Stand der Technik. Zur Platzeinsparung kann demnach vorgesehen werden, dass die Drehführung in Axialrichtung betrachtet zumindest teilweise innerhalb eines hohlzylindrischen Innenraums der trommelartigen Wickelvorrichtung angeordnet wird. Entsprechend der Dimensionierung der Wickelvorrichtung und/oder dem erforderlichen Relativdrehwinkel kann die Drehführung auch vollständig innerhalb des Hohlraums in der trommelartigen Wickelvorrichtung aufgenommen werden. Dies ermöglicht auch bei langen Verfahrwegen und großen Leitungsquerschnitten eine relativ kompakte Bauweise. So kann das System bspw. in einem Standard-Container untergebracht werden.

Das vorgeschlagene Leitungsführungssystem eignet sich insbesondere zur Landstromversorgung eines Hochseeschiffes, bspw. eines Containerschiffes, z.B. wenn dieses im Hafen anliegt.

Die Erfindung betrifft ferner die Drehführung für sich genommen, unabhängig von einer trommelartigen Wickelvorrichtung. Die Drehführung umfasst mindestens eine Leitung, welche von einem ersten Punkt zu einem diesem gegenüber um eine Drehachse relativdrehbaren zweiten Punkt in der Drehführung geführt ist. Hierbei weist die mindestens eine Leitung in der Drehführung einen wendelförmigen Verlauf auf mit einer oder mehreren ersten Wendellagen, in welchen die Leitung um die Drehachse gewunden ist, einer oder mehreren zweiten Wendellagen, in welchen die Leitung im Gegensinn um die Drehachse gewunden ist, und dazwischen einem Umlenkbogen der beide Wendellagen verbindet. Im Umlenkbogen ist die Leitung umgeschlagen bzw. verändert ihren Drehsinn.

Eine Ausführungsform (nach Anspruch 16) zeichnet sich dadurch aus, dass die Drehführung eine äußere rohrförmige Stützhülse zum Abstützen der Wendellagen radial nach außen und auch eine innere rohrförmige Stützhülse zum Abstützen der Wendellagen radial nach innen aufweist, wobei beide rohrförmigen Stützhülsen von der Drehung des zweiten Punkts entkoppelt drehbar sind.

Eine alternative Ausführungsform der Drehführung (nach Anspruch 17) zeichnet sich dadurch aus, dass die Drehführung mindestens eine rohrförmige Stützhülse zum Abstützen der Wendellagen aufweist, und dass die Drehführung eine Leitungsführungseinrichtung, umfasst, in welcher die Leitung entsprechend dem wendelförmigen Verlauf geführt ist und welche radial gerichtete Stützrollen aufweist zwecks Drehentkopplung durch Abrollen an der mindestens einen Stützhülse.

Die mindestens eine rohrförmige Stützhülse kann drehfest an der Drehung des zweiten Punkts teilnehmen. Die Stützhülse kann durch einen vorhandenen Bauteil, wie z.B. eine Antriebswelle, gebildet sein. Die Stützhülse kann, wie oben erläutert, insbesondere auch als zusätzliches Bauteil vorgesehen werden. Es können auch eine radial innere und radial äußere Stützhülse vorgesehen sein, wobei insbesondere eine von beiden oder beide nicht drehentkoppelt sind. Als Leitungsführungseinrichtung kann insbesondere eine Energieführungskette für Kreisverläufe eingesetzt werden, welche durch entsprechende Stützrollen ergänzt, z.B. nachgerüstet wird.

Bei Verwendung einer Leitungsführungseinrichtung, kann eine um die Drehachse drehbare Welle zum Antrieb einer mit dem zweiten Punkt drehfesten Vorrichtung, insbesondere einer trommelartigen Wickelvorrichtung, vorgesehen sein, an welcher die Stützrollen der Leitungsführungseinrichtung abrollen. In dieser Ausführungsform ist keine zusätzliche innere Stützhülse erforderlich. Dabei kann eine äußere rohrförmige Stützhülse vorgesehen sein, an welcher weitere radial gerichtete Stützrollen der Leitungsführungseinrichtung abrollen, oder welche von der Drehung der Welle entkoppelt drehbar ist. Im letztgenannten Fall sind Stützrollen nur radial innen an der Leitungsführungseinrichtung vorgesehen.

Das System und die Drehführung erlauben es, darin mehrere Versorgungsleitungen durchgehend vom ersten Punkt zum zweiten Punkt zu führen, insbesondere auch schwere Leitungen oder Leitungen mit großem Querschnitt.

Die Erfindung wird, ohne Beschränkung der vorstehenden allgemeineren Beschreibung im Folgenden anhand von in den Zeichnungen dargestellten bevorzugten Ausführungsformen näher erläutert. Hierbei zeigen:
- FIG.1:: eine Teilansicht in perspektivischer Explosionsdarstellung eines ersten Ausführungsbeispiels der Erfindung mit freiliegend in der Drehführung geführter Leitung;
- FIG.2A-2B:: Querschnitte durch die Drehführung nach FIG.1 bei Drehung in der einen Drehrichtung (FIG.2A) und in der entgegengesetzten Drehrichtung (FIG.2B);
- FIG.3A-3B:: Längsschnitte entsprechend den Schnittlinien A-A bzw. B-B aus FIG.2A-2B mit einer Pfeildarstellung des jeweiligen Drehsinns;
- FIG.4:: eine Teilansicht in perspektivischer Explosionsdarstellung eines weiteren Ausführungsbeispiels einer Drehführung für ein Leitungsführungssystem, mit einer Leitungsführungseinrichtung, in welcher mindestens eine Leitung geführt ist;
- FIG.5A-5B:: ein bevorzugtes Ausführungsbeispiel einer Energieführungskette als Leitungsführungseinrichtung zur Verwendung in einer Drehführung z.B. gemäß FIG.4;
- FIG.6:: eine Perspektivschema eines Leitungsführungssystems mit einer trommelartigen Wickelvorrichtung zum Auf- und Abspulen mehrerer Leitungen und mit einer Drehführung, z.B. gemäß FIG.1 oder FIG.4;
- FIG.7:: ein Leitungsführungssystem nach dem Stand der Technik (aus DE 10 2012 110 967 A1, nicht erfindungsgemäß).

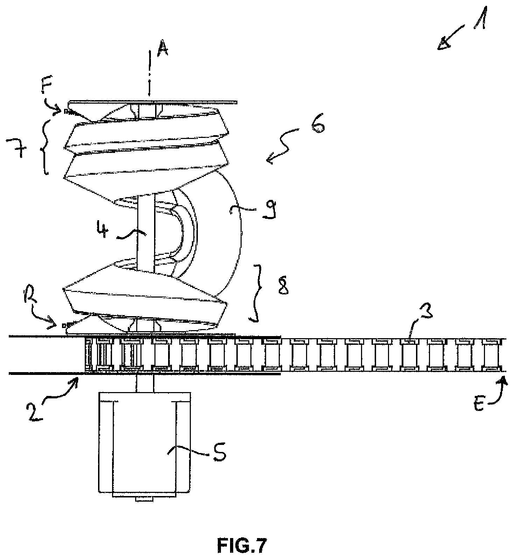

FIG.7 zeigt ein bekanntes Leitungsführungssystem für auf- und abspulbare Leitungen wie bspw. Stromversorgungskabel und Schläuche z.B. für Druckluft oder Flüssigkeit. Das in FIG.7 allgemein mit 1 bezeichnete Leitungsführungssystem umfasst eine trommelartige Wickelvorrichtung 2 zum spiraligen Auf- und Abspulen einer Energieführungskette 3, welche die mehreren Leitungen (nicht gezeigt) parallel führt. Die Wickelvorrichtung 2 ist anhand einer Welle 4 drehbar gelagert und über einen Antrieb 5, bspw. einen Elektromotor, angetrieben. Die Welle 4 definiert eine Drehachse A.

Die mit der Wickelvorrichtung 2 auf- und abspulbaren Leitungen gehen ununterbrochen durch von einem ersten, raumfesten Punkt F über eine allgemein mit 6 bezeichneten Drehführung zu einem relativ weiter zum gegenüber dem ersten Punkt F drehbaren zweiten Punkt R an der Trommel der Wickelvorrichtung 2 bis hin zu einem freien Ende E an der Energieführungskette 3.

Um eine Relativdrehung zwischen den Punkten F und R über einen großen Drehwinkel um die Drehachse A zu ermöglichen, ist in der Drehführung 6 ein wendelförmiger Verlauf mit Leitungsumschlag vorgesehen. Eine zu diesem Zweck gestaltete Leitungsführungseinrichtung, bspw. gemäß WO 2011/086198 A2, kann diesen wendelförmigen Verlauf vorgeben bzw. unterstützen. Dieser Verlauf hat erste Wendellagen 7, in welchen die geführten Leitungen um die Drehachse A der Welle 4 schraubenlinienförmig gewunden sind, sowie axial gegenüberliegend zweite Wendellagen 8, in welchen die Leitungsführungseinrichtung mitsamt der darin geführten Leitungen im entgegengesetzten Drehsinn um die Drehachse A gewunden ist. Die beiden gegensinnig gewundenen Gruppen aus Wendeln 7, 8 sind über einen Umlenkbogen 9 miteinander verbunden und bilden somit voneinander getrennt drehbare Trume aus Windungen. Im Umlenkbogen 9 schlagen die geführten Leitungen um von dem einen Drehsinn in den entgegengesetzten Drehsinn. Als Wendellage 7, 8 wird vorliegend jede Vollumdrehung (Wendel) oder Teilumdrehung (Teilwendel) entlang einer Schraubenlinie um die Drehachse A zwischen den Punkten F, R verstanden, da das verbleibende Umfangsmaß nahe dem Anschlag an den Punkten F, R jeweils klein wird.

Der in FIG.7 als Momentaufnahme beispielhaft veranschaulichte wendelförmige Verlauf ändert seine Stellung je nach der relativen Drehwinkellage der Punkten F, R. Bei Relativdrehung der Wickelvorrichtung 2 mit dem zweiten Punkt R gegenüber dem ersten Punkt F wandert der Umlenkbogen 9 in Axialrichtung zwischen den stirnseitigen Enden an den jeweiligen Punkten F, R und die jeweilige Anzahl Wendeln bzw. Windungen in den Gruppen der Wendellagen 7, 8 nimmt entsprechend der Drehung zu bzw. ab. Bezüglich weiterer Einzelheiten zu Funktion und Aufbau des Leitungsführungssystems 1 nach FIG.7 sei auf die insoweit hier einbezogene DE 10 2012 110 967 A1 verwiesen.

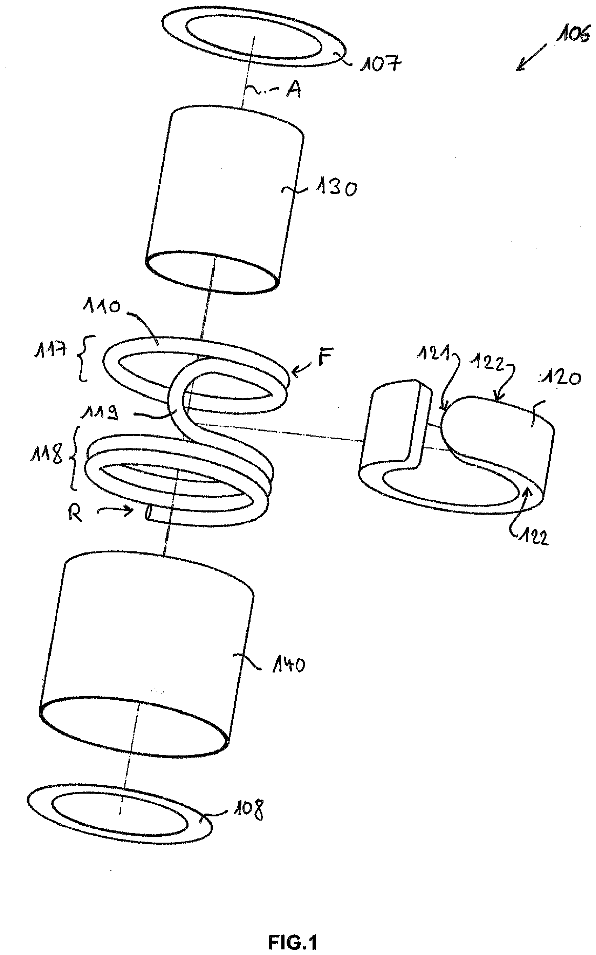

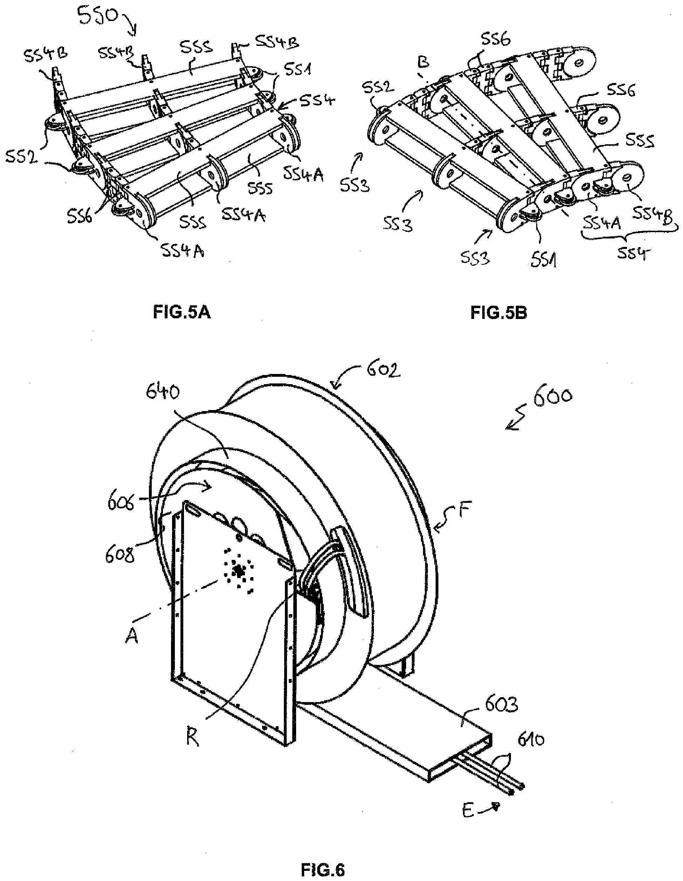

Eine erfindungsgemäße Ausführungsform einer Drehführung 106 ist in FIG.1 veranschaulicht. Hierbei sind einige Bestandteile, insbesondere die trommelartige Wickelvorrichtung (s. FIG.5) in FIG.1 zur besseren Übersicht nicht dargestellt. In FIG.1 ist eine einzige Leitung 110, bspw. ein Mehrphasen-Starkstromkabel, freiliegend geführt (ohne Leitungsführungseinrichtung bzw. Energieführungskette in der Drehführung 106). In betriebsbereitem Zustand bildet die Leitung 110, je nach Drehstellung, eine oder mehrere Wendellagen 117 um die Drehachse A sowie eine oder mehrere zweite Wendellagen 118 im entgegengesetzten Drehsinn um die Drehachse A. Die Wendellagen 117, 118 sind durch einen Umlenkbogen 119 miteinander verbunden, in welchem die Leitung 110 umgeschlagen ist. Die Funktion des wendelförmigen Verlaufs mit den gegensinnigen Wendellagen 117, 118 und dem Umlaufbogen 119 entspricht FIG.7. Die Gesamtanzahl an Vollwendeln über die Wendellagen 117, 118 gibt den maximalen Drehwinkel vor (eine Vollwendel ermöglicht ca. 600° bis 720° Drehwinkel). Die Gesamtanzahl an Vollwendeln beträgt vorzugsweise n≥3.

Zur Stützung des Umlenkbogens 119 weist die Drehführung 106 einen Stützkörper 120 auf, mit einem im Wesentlichen in Umfangsrichtung weisenden Umlenkbereich 121. Der Umlenkbereich 121 ist zur Mittelebene des Stützkörpers 120 hin abgeschrägt und geht in entsprechend schräg gestellte seitliche Laufflächen 122 über, die überwiegend in Axialrichtung weisen und deren Tangentialfläche die Drehachse A schneidet.

Der Umlenkbereich 121 des Stützkörpers 120 bildet im gezeigten Beispiel eine Gleitfläche, deren Formgebung den gewünschten Verlauf des daran anliegenden Umlenkbogens 119 vorgibt. Er gewährleistet u.a. einen schonenden minimalen Krümmungsradius der Leitung 110 im Umlenkbogen 119. Der Stützkörper 120 erstreckt sich in Umfangsrichtung über ein Winkelmaß von zwischen 270° bis fast 360° und ist um die Drehachse A frei drehbar angeordnet. Die Gleitfläche am Umlenkbereich 121 und an den Laufflächen 122 kann eine die Gleitreibung vermindernde Beschichtung oder ein tribologisch optimiertes Material aufweisen. Alternativ oder ergänzend können reibungsvermindernde Laufrollen am Umlenkbereich 121 und/oder an den Laufflächen 122 des Stützkörper 120 vorgesehen sein. Durch den Stützkörper 120 wird einerseits die Form des Umlenkbogens 119 vorgegeben und andererseits sichergestellt, dass die gegensinnigen und relativ zueinander drehenden Wendellagen 117, 118 axial voneinander beabstandet sind damit keine Reibung zwischen den unmittelbar benachbarten Windungen bzw. Wendeln der beiden gegensinnig verlaufenden Wendellagen 117, 118 entsteht. Der Umlenkbereich 121 und die Laufflächen 122 können zudem durch geeignete Abschrägung ein Aufbäumen des Umlenkbogens 119 verhindern.

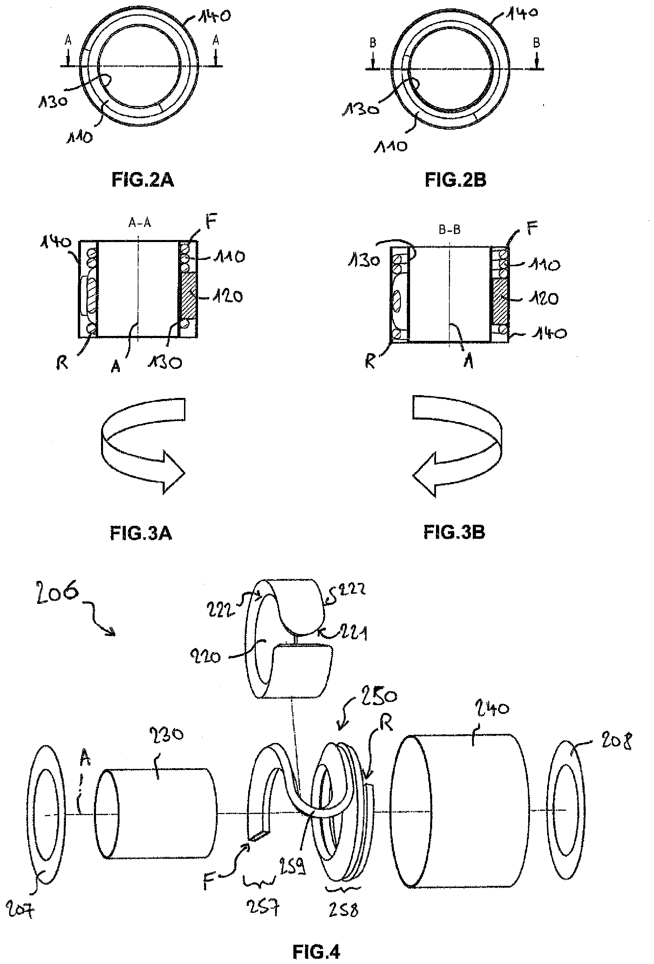

FIG.1 zeigt weiterhin eine hohlzylindrische innere Stützhülse 130 sowie eine hohlzylindrische äußere Stützhülse 140, welche als zusätzliche Bauteile koaxial zur Drehachse A gelagert sind. Die Stützhülsen 130, 140 sind rohrförmig, z.B. als Zuschnitte eines Rohrs aus Stahlblech hergestellt. Der Durchmesser der äußeren Stützhülse 140 ist dabei größer, als der Durchmesser der inneren Stützhülse 130 um einen Betrag der etwas mehr das Doppelte des Leitungsdurchmessers der Leitung 110 beträgt, sodass Bewegungsspiel für die Leitung 110 im Zwischenraum vorliegt, wie in FIG.3A-3B ersichtlich.

An den Stirnenden der Stützhülsen 130, 140 weist die Drehführung 106 scheibenförmige Flansche 107, 108 zur axialen Abstützung der Leitung 110 auf. Die Flansche 107, 108 vermeiden u.a. ein axiales Abgleiten der Wendellagen 117, 118 im Betrieb.

Anhand FIG.2A-3B wird die Funktionsweise der Drehführung 106, insbesondere der Stützhülsen 130, 140 gemäß FIG.1 ersichtlich. Bei Drehung des zweiten Punkts R in eine erste Drehrichtung gegenüber dem feststehenden ersten Punkt F (FIG.2A, 3A) schnürt der wendelförmige Verlauf der Leitung 110 radial nach innen ein. So kommt die Leitung 110 mit zumindest einigen oder ggf. allen Wendeln (wie hier in FIG.2A-3A gezeigt) radial nach innen in einen abgestützten Anschlag mit der inneren Stützhülse 130. Bei Relativdrehung des zweiten Punkts R gegenüber dem ersten raumfesten Punkt F in die entgegengesetzte Drehrichtung (FIG.2B-3B) tritt der entgegengesetzte Effekt ein. Die wendelförmig angeordnete Leitung 110 spannt sich dabei radial nach außen auf und liegt abgestützt im Anschlag an der äußeren Stützhülse 140 (FIG.3B). Die zusätzlichen Stützhülsen 130, 140 fangen die entsprechende Einschnürung bzw. das Aufspannen auf und vermeiden damit störende Auswirkung auf die weiteren beweglichen Teile, z.B. die Welle (vgl. FIG.7) oder die Trommel (vgl. FIG.5).

Im ersten Ausführungsbeispiel nach FIG.1 und FIG.2A-3B sind sowohl die innere Stützhülse 130 als auch die äußere Stützhülse 140 jeweils unabhängig voneinander und in Bezug auf die sonstigen Bauteile, insbesondere in Bezug auf eine Welle der trommelartigen Wickelvorrichtung (s. FIG.5 bzw. 7) frei drehbar, d.h. von der vorgegebenen Drehung des zweiten Punkts R entkoppelt. Hierdurch wird eine unerwünschte Überbeanspruchung bedingt durch die in FIG.3A bzw. FIG.3B veranschaulichten Effekte auf einfache Weise verhindert.

FIG.4 zeigt ein alternatives Ausführungsbeispiel einer erfindungsgemäßen Drehführung 206. Dieses unterscheidet sich von dem Vorstehenden insbesondere darin, dass in der Drehführung 206 mehrere Leitungen (nicht gezeigt) in einer zusätzlichen Leitungsführungseinrichtung 250, bspw. einer Energieführungskette, entsprechend dem gewünschten wendelförmigen Verlauf geführt sind. Durch eine Leitungsführungseinrichtung 250 können Zug- und Schubbelastungen aufgenommen und deren Auswirkung auf die Leitungen, insbesondere im Bereich um den Umlenkbogen 259, vermieden werden.

Die Leitungsführungseinrichtung 250 nach FIG.4 weist ebenfalls eine oder mehrere erste Wendellagen 257 sowie gegensinnig verlaufende Wendellagen 258 und einen diese verbindenden Umlenkbogen 259 auf. Anhand der Leitungsführungseinrichtung 250 kann ein gewünschter vorbestimmter Wendelverlauf auch bei gemeinsamer Führung von mehreren Leitungen (nicht gezeigt) sichergestellt werden. Die Leitungsführungseinrichtung 250 kann u.a. in Axialrichtung für einen günstigen Wendelverlauf vorgespannt werden. Als Leitungsführungseinrichtung 250 kann eine besonderes für kreisförmige Verläufe gestaltete Energieführungskette z.B. gemäß WO 98/31950 A1 eingesetzt werden.

Im Ausführungsbeispiel nach FIG.4 sind eine innere Stützhülse 230 und eine äußere Stützhülse 240 vorgesehen, welche rohrförmig und koaxial zur Drehachse A frei drehbar gelagert sein können, bspw. anhand geeigneter Drehlagerung an einer nicht gezeigten Welle der Wickelvorrichtung (s. FIG.7). In der Drehführung 206 kompensiert die innere Stützhülse 230 ein Einschnüren der Leitungsführungseinrichtung 250 radial nach innen und die äußere Stützhülse 240 ein Aufspannen der Leitungsführungseinrichtung 250 radial nach außen.

Die sonstigen Bauteile der Drehführung 206 entsprechen funktionell denjenigen aus FIG.1 mit um hundert erhöhten Bezugszeichen, wobei der Stützkörper 220 dem Krümmungsradius der Leitungsführungseinrichtung 250 um die Drehachse A und dem Krümmungsradius des Umlenkbogens 259 angepasst ist. Die Dimensionierung kann insgesamt größer sein, bspw. für mehrere, längere und/oder schwerere Leitungen.

Es liegt ebenfalls im Rahmen der Erfindung, die Stützhülsen 230, 240 bei Verwendung einer Leitungsführungseinrichtung 250 nicht frei drehend auszuführen. In diesem Fall kann die Drehbewegung der Stützhülsen 230, 240 an diejenige des zweiten Punkts R bzw. des ersten Punkts F gekoppelt sein, was bei besonders großen Durchmessern konstruktiv einfacher sein kann. Die Drehentkopplung der Leitungen bzw. Leitungsführungseinrichtung 250 zur Vermeidung von schädlicher Reibung durch den Einschnürungs- bzw. Aufspanneffekt (FIG.3A bzw. FIG.3B) kann durch eine in FIG.5A-5B beispielhaft gezeigte Gestaltung einer Energieführungskette 550 mit radial gerichteten Stützrollen 551, 552 erzielt werden. Diese Alternative zur entkoppelten Drehbarkeit der Stützhülsen 230, 240 kann beidseitig, radial innen und radial außen, oder in Teilen kombiniert, z.B. mit Stützrollen radial innen und einer frei drehbaren Stützhülse radial außen vorgesehen werden. Im letztgenannten Fall kann die radial innere Stützhülse entfallen, wenn die Leitungsführungseinrichtung 250 auf einer Welle abrollen kann.

Eine erfindungsgemäße Energieführungskette 550, in FIG.5A-5B nur als kleiner repräsentativer Längsabschnitt veranschaulicht, zur Verwendung als Leitungsführungseinrichtung bspw. im Aufbau nach FIG.4, hat mehrere Stränge 553 aus Einzelteilen eines Baukasten-Systems umfassend Seitenlaschen 554 und Querstege 555. Die Seitenlaschen 554 und Querstege 555 sind über die Querstege 555 miteinander stabil und etwa parallel verbunden, sodass ein Aufnahmeraum für die Leitungen dazwischen gebildet wird.

Im mittleren Laschenstrang und im radial äußeren Laschenstrang 553 sind zusätzliche Zwischenstücke 556 vorgesehen, welche die Länge des Strangs so einstellen, dass die Energieführungskette 550 insgesamt seitlich gekrümmt verläuft. Dies ermöglicht den gewünschten Schraubenlinien- bzw. Wendelverlauf (FIG.4).

Um wahlweise Zwischenstücke 556 einfügen zu können, sind die Seitenlaschen 554 aus zwei lösbaren, konjugierten Laschenteilen 554A, 554B in Längsrichtung zusammengesetzt. Ein erster Laschenteil 554A hat an einem Ende eine gabelförmige Aufnahme, in welche das andere laschenförmige Ende eines gegenüberliegenden zweiten Laschenteils 554B eingreift. Diese etwa halbrunden Enden sind über eine geeignete Bolzen-/Bohrung Gelenkverbindung jeweils um eine Schwenkachse B schwenkbar gelenkig verbunden. In Einbaulage (FIG.4) verläuft die Schwenkachse B jeweils etwa radial bzw. senkrecht durch die Drehachse A. Dabei ist auf geeignete und dem Fachmann bekannte Art an den Seitenlaschen 554 eine Schwenkwinkelbegrenzung (nicht gezeigt) vorgesehen, welche zur Wahrung eines minimalen Krümmungsradius im Umlenkbogen 259 (FIG.4) der Energieführungskette 550 den maximalen Schwenkwinkel der Gelenkverbindung begrenzt.

An den jeweils zu einer Seitenlasche 554 zusammenzufügenden Enden der Laschenteile 554A, 554B sind etwa E-förmige Schnittstellen mit Verzahnungen vorgesehen, durch deren ineinandergreifende Vorsprünge der Seitenlasche 554 ein Splint oder Stift (nicht gezeigt) ragt, der mittig und in der Hauptebene der Seitenlasche 554 liegt und ggf. auch die Querstege 555 sichert. Um die Achse des Splints bzw. Stifts, die senkrecht zur Schwenkachse B in der Hauptebene liegt, sind die Laschenteile 554A, 554B einer Seitenlasche 554 über einen kleinen Winkel seitlich schwenkbar zum Zwecke der seitlichen Krümmung der Energieführungskette 550, wie in FIG.5A-5B veranschaulicht. Die Zwischenstücke 556 haben beidseitig entsprechend zu den Schnittstellen der Laschenteile 554A, 554B passende Schnittstellen zwecks Verbindung mit den Laschenteilen 554A, 554B, wie am besten in FIG.5B ersichtlich. Die Laschenteile 554A, 554B können zur Verwendung in allen Strängen symmetrisch ausgeführt sein, um die Anzahl Gleichteile des Baukasten-Systems zu erhöhen. Die Laschenteile 554A, 554B, Querstege 555 und Zwischenstücke 556 sind vorzugsweise aus Kunststoff im Spritzgussverfahren gefertigt.

Die Stützrollen 551, 552 können über Haltearme, die an einem der beiden Laschenteile 554A, 554B einstückig angeformt sind, gelagert sein. Die Stützrollen 551, 552 liegen jeweils senkrecht zur Hauptebene der Seitenlasche 554 und sind in Betriebslage um eine tangentiale Drehachse, senkrecht zur Schwenkachse B drehbar. Die Stützrollen 551, 552 erlauben ein sehr reibungsarmes Abrollen der Energieführungskette 550, z.B. an den zusätzlichen Stützhülsen 230, 240, an einer Welle als innere Stütze (vgl. FIG.7) oder an der Innenseite einer Trommel der Wickelvorrichtung (vgl. FIG.6) als äußere Stütze. Somit kann auch über eine Energieführungskette 550 mit Stützrollen 551, 552 wie in FIG.5A-5B die Funktion der Drehentkopplung, z.B. in einem Aufbau nach FIG.4 realisiert werden. Die Stützrollen 551, 552 können auch an nachrüstbaren, separaten Anbauteilen vorgesehen sein.

FIG.6 zeigt beispielhaft ein Leitungsführungssystem 600 insgesamt, für mehrere auf- und abspulbare Leitungen 610. Das Leitungsführungssystem 600 umfasst eine Wickelvorrichtung, z.B. als Trommel 602, mit großem innerem Hohlraum, und eine Drehführung 606, welche überwiegend im Hohlraum der Trommel 602 aufgenommen ist zur Platzeinsparung. Auf der Trommel 602 ist eine geeignete Energieführungskette 603, in FIG.6 schematisch gezeigt, zum auf- und abspulen des freien Endes E der Leitungen 610 spiralig aufgewickelt.

Die Drehführung 606 kann in FIG.6 nach dem Prinzip aus FIG.1, d.h. mit einer gegenüber der Trommel 602 frei drehbaren äußeren Stützhülse 640 und einer frei drehbaren inneren Stützhülse 630 (nicht sichtbar in FIG.6) ausgeführt sein, oder z.B. mit einer die Drehung entkoppelnden Energieführungskette 550 nach FIG.5A-5B in einem Aufbau gemäß FIG.4, wobei Stützhülsen z.B. synchron mit der Trommel 602 drehen. Anstelle separater Bauteile können die Stützhülsen somit bei Verwendung einer Energieführungskette 550 mit Stützrollen 551, 552 (FIG.5A-5B) z.B. auch durch die Innenseite der Trommel 602 und eine die Trommel um die Achse A drehbar lagernde Hohlwelle (nicht sichtbar in FIG.6) gebildet sein. Die Leitungen 610 gehen vom drehbaren Punkt R der Drehführung 606 über auf das an der Trommel 602 festgelegte Ende und von dort ununterbrochen zum freien Ende E der trommelseitigen Energieführungskette 603. Andererseits gehen die Leitungen 610 über die Drehführung 606 ununterbrochen durch zum feststehenden Punkt (nicht gezeigt) und ggf. von dort weiter zu den jeweiligen Anschluss- bzw. Verbindungsstellen. Die Energieführungskette 550 im Aufbau nach FIG.4, oder die Leitung 110 im Aufbau nach FIG.1, wird durch die Bauteile der Drehführung 606 in allen Richtungen geführt, sodass Drehbewegung ohne Verhaken oder Klemmen erfolgen kann.

Das erfindungsgemäße Leitungsführungssystem 601 eignet sich besonders für schwere Leitungen 610 und/oder Leitungen mit großen Leitungsquerschnitten, beispielsweise für Starkstromkabel zur mehrphasigen Landstrom-Versorgung von Hochseeschiffen.

### Bezugszeichenliste

FIGS.1, 2A-2B, 3A-3B
   - 106: Drehführung
   - 107, 108: Flanschscheiben
   - 110: Leitung
   - 117: erste Wendellagen
   - 118: zweite Wendellagen
   - 119: Umlenkbogen
   - 120: Stützkörper
   - 121: Umlenkbereich
   - 122: Lauffläche
   - 130: innere Stützhülse
   - 140: äußere Stützhülse
   - A: Drehachse
   - E: freies Ende
   - F: raumfester Punkt
   - R: drehbarer Punkt
FIG.4
   - 206: Drehführung
   - 207, 208: Flanschscheiben
   - 220: Stützkörper
   - 221: Umlenkbereich
   - 222: Lauffläche
   - 230: innere Stützhülse
   - 240: äußere Stützhülse
   - 250: Leitungsführungseinrichtung
   - 257: erste Wendellagen
   - 258: zweite Wendellagen
   - 259: Umlenkbogen
   - A: Drehachse
   - F: raumfester Punkt
   - R: drehbarer Punkt
FIG.5A-5B
   - 550: Energieführungskette
   - 551, 552: Stützrollen
   - 554: Seitenlasche
   - 554A, 554B: Laschenteile
   - 555: Quersteg
   - 556: Zwischenstück
   - B: Schwenkachse
FIG.6
   - 601: Leitungsführungssystem
   - 602: Trommel
   - 603: Energieführungskette
   - 606: Drehführung
   - 608: Flanschscheibe
   - 610: Leitungen
   - 640: äußere Stützhülse
   - A: Drehachse
   - R: drehbarer Punkt
FIG.7 (Stand der Technik)
   - 1: Leitungsführungssystem
   - 2: Wickelvorrichtung
   - 3: Energieführungskette
   - 4: Welle
   - 5: Antrieb
   - 6: Drehführung
   - 7: erste Wendellagen
   - 8: zweite Wendellagen
   - 9: Umlenkbogen
   - A: Drehachse
   - F: raumfester Punkt
   - R: drehbarer Punkt

## Patentansprüche

1. Leitungsführungssystem (600) für mindestens eine auf- und abspulbare Leitung, umfassend
eine trommelartige Wickelvorrichtung (602) zum auf- und abspulen mindestens einer Leitung (610), insbesondere eines Kabels, eines Schlauchs oder dergleichen, welche anhand einer Welle um eine Drehachse (A) drehbar ist; und
eine Drehführung (106; 206; 606) zur Führung der mindestens einen Leitung von einem ersten Punkt (F) zu einem mit der Wickelvorrichtung drehfest verbundenen zweiten Punkt (R), welcher relativ zum ersten Punkt drehbar ist, wobei die Drehführung einen wendelförmigen Verlauf aufweist mit einer oder mehreren ersten Wendellagen (117; 257), in welchen die Leitung um die Drehachse (A) gewunden ist, einer oder mehreren zweiten Wendellagen (118; 258), in welchen die Leitung im Gegensinn um die Drehachse gewunden ist, und einem Umlenkbogen (119; 259) der beide Wendellagen verbindet und in welchem die Leitung umgeschlagen ist;
**dadurch gekennzeichnet, dass**
die Drehführung (106; 206; 606) koaxial zur Drehachse angeordnet eine äußere rohrförmige Stützhülse (140; 240; 640) und/oder eine innere rohrförmige Stützhülse (130; 230) aufweist, zum Abstützen der Wendellagen radial nach außen bzw. radial nach innen, und dass die Drehführung eine Drehentkopplung aufweist, aufgrund welcher an der Stützhülse abgestützte Wendellagen (117; 257, 118; 258) von der Wickelvorrichtung (602) entkoppelt um die Drehachse (A) drehbar sind.

2. Leitungsführungssystem nach Anspruch 1, **dadurch gekennzeichnet, dass** eine innere rohrförmige Stützhülse (130; 230) vorgesehen ist, welche zwecks Drehentkopplung mittels einer Drehlagerung relativ zur Wickelvorrichtung und um die Drehachse drehbar ist.

3. Leitungsführungssystem nach Anspruch 1 oder 2, **dadurch gekennzeichnet, dass** eine äußere rohrförmige Stützhülse (140; 240)vorgesehen ist, welche zwecks Drehentkopplung mittels einer Drehlagerung relativ zur Wickelvorrichtung und um die Drehachse drehbar ist.

4. Leitungsführungssystem nach Anspruch 1, 2 oder 3, **dadurch gekennzeichnet, dass** die Leitung (110) in der Drehführung freiliegend geführt ist und je nach Drehrichtung unmittelbar an der äußeren bzw. inneren Stützhülse (130; 140) abstützt.

5. Leitungsführungssystem nach einem der vorstehenden Ansprüche, insbesondere nach Anspruch 4, **dadurch gekennzeichnet, dass** die Drehführung einen um die Drehachse (A) gebogenen Stützkörper (120; 220) für den Umlenkbogen (119; 259) umfasst, mit einem in Umfangsrichtung weisenden Umlenkbereich (121; 221), der an den Umlenkbogen angepasst ist, wobei der Stützkörper relativ zu der bzw. den Stützhülse(n) frei drehbar ist, insbesondere mit der halben Umdrehungsgeschwindigkeit der Wickelvorrichtung.

6. Leitungsführungssystem nach Anspruch 5, insbesondere nach Anspruch 2, 3 und 5, **dadurch gekennzeichnet, dass** der Stützkörper (120; 220) zwischen den Stützhülsen (130, 140; 230, 240) axial verschieblich geführt ist, insbesondere gleitend gelagert ist.

7. Leitungsführungssystem nach Anspruch 5 oder 6, **dadurch gekennzeichnet, dass** der Stützkörper (120; 220) zumindest an seinem Umlenkbereich (121; 221) zur Reibungsverminderung eine durchgehende Gleitfläche oder Führungsrollen aufweist.

8. Leitungsführungssystem nach Anspruch 1, 2 oder 3, wobei die Drehführung eine Leitungsführungseinrichtung (250; 550) umfasst, in welcher die Leitung entsprechend dem wendelförmigen Verlauf geführt ist, **dadurch gekennzeichnet, dass** die Leitungsführungseinrichtung zwecks Drehentkopplung Stützrollen (551, 552) aufweist.

9. Leitungsführungssystem nach Anspruch 8, **dadurch gekennzeichnet, dass** die Leitungsführungseinrichtung als Energieführungskette (550) ausgeführt ist mit schwenkbar verbundenen Kettengliedern, welche jeweils mindestens eine innere Seitenlasche (554), eine äußere Seitenlasche (554) sowie einen die Seitenlaschen verbindenden Quersteg (550) umfassen, wobei zwecks Drehentkopplung
- zumindest an einigen der inneren Seitenlaschen jeweils eine radial nach innen gerichtete Stützrolle (551); und/oder
- zumindest an einigen der äußeren Seitenlaschen jeweils eine radial nach außen gerichtete Stützrolle (552) vorgesehen ist.

10. Leitungsführungssystem nach Anspruch 9, **dadurch gekennzeichnet, dass** die Energieführungskette (550) zur Bildung des wendelförmigen Verlaufs einen längeren äußeren Laschenstrang (553) und einen kürzeren inneren Laschenstrang (553) aufweist, wobei der äußere Laschenstrang vorzugsweise jeweils zwischen zwei Paaren schwenkbar verbundener Seitenlaschenteile (554A, 554B) mindestens ein Zwischenstück (556) zur Verlängerung in Längsrichtung aufweist.

11. Leitungsführungssystem nach einem der vorstehenden Ansprüche, **dadurch gekennzeichnet, dass** die Drehführung endseitig einen ersten scheibenförmigen Flansch (107; 207), an welchem der erste Punkt (F) ortsfest angeordnet ist, und einen zweiten scheibenförmigen Flansch (108; 208; 608) aufweist, welcher mit der trommelartigen Wickelvorrichtung (602) drehfest verbunden ist und an welchem der zweite Punkt (R) angeordnet ist, wobei die Stützhülse(n) (130, 140; 230, 240; 640) bezüglich beider Flansche frei drehbar ist bzw. sind.

12. Leitungsführungssystem nach einem der vorstehenden Ansprüche, umfassend eine Welle zum Antrieb der Wickelvorrichtung, **dadurch gekennzeichnet, dass** jede Stützhülse (130, 140; 230, 240; 640) anhand einer Drehlagerung frei drehbar an der Welle gelagert ist.

13. Leitungsführungssystem nach einem der vorstehenden Ansprüche, umfassend eine Leitung, insbesondere ein Mehrphasen-Starkstromkabel, **dadurch gekennzeichnet, dass** die Leitung (610) einen ersten auf der trommelartigen Wickelvorrichtung (602) aufgewickelten Abschnitt, mit einem auf- und abspulbaren freien Ende (E), umfasst sowie einen zweiten in der Drehführung (606) aufgenommenen Abschnitt mit wendelförmigem Verlauf und einem ortsfest am ersten Punkt (F) anschließbaren Ende, wobei die Leitung vom ersten Punkt über den zweiten Punkt (R) bis zum auf- und abspulbaren freien Ende (E) unterbrechungsfrei durchgehend ist.

14. Leitungsführungssystem nach einem der vorstehenden Ansprüche, **dadurch gekennzeichnet, dass** die Drehführung (606) in Axialrichtung zumindest teilweise innerhalb der trommelartigen Wickelvorrichtung (602) angeordnet ist oder vollständig darin aufgenommen ist.

15. Verwendung eines Leitungsführungssystems nach einem der Ansprüche 1 bis 14 zur Landstromversorgung eines Hochseeschiffes.

16. Drehführung (106) für ein Leitungsführungssystem, insbesondere nach einem der Ansprüche 1 bis 14, umfassend mindestens eine Leitung (110), welche von einem ersten Punkt (F) zu einem gegenüber dem ersten Punkt um eine Drehachse relativdrehbaren zweiten Punkt (R) in der Drehführung geführt ist, wobei die Leitung in der Drehführung einen wendelförmigen Verlauf aufweist mit einer oder mehreren ersten Wendellagen (117), in welchen die Leitung um die Drehachse gewunden ist, einer oder mehreren zweiten Wendellagen (118), in welchen die Leitung im Gegensinn um die Drehachse gewunden ist, und dazwischen einem Umlenkbogen (119) der beide Wendellagen verbindet und in welchem die Leitung umgeschlagen ist;
**dadurch gekennzeichnet, dass**
die Drehführung eine äußere rohrförmige Stützhülse (140) zum Abstützen der Wendellagen radial nach außen und eine innere rohrförmige Stützhülse (130) zum Abstützen der Wendellagen radial nach innen aufweist, und
dass die rohrförmigen Stützhülsen von der Drehung des zweiten Punkts (R) entkoppelt drehbar sind.

17. Drehführung (206; 606) für ein Leitungsführungssystem, insbesondere nach einem der Ansprüche 1 bis 14, umfassend mindestens eine Leitung (610), welche von einem ersten Punkt zu einem gegenüber dem ersten Punkt um eine Drehachse relativdrehbaren zweiten Punkt in der Drehführung geführt ist, wobei die Leitung in der Drehführung einen wendelförmigen Verlauf aufweist mit einer oder mehreren ersten Wendellagen (257), in welchen die Leitung um die Drehachse gewunden ist, einer oder mehreren zweiten Wendellagen (258), in welchen die Leitung im Gegensinn um die Drehachse gewunden ist, und dazwischen einem Umlenkbogen (259) der beide Wendellagen verbindet und in welchem die Leitung umgeschlagen ist;
**dadurch gekennzeichnet, dass**
die Drehführung mindestens eine rohrförmige Stützhülse (230, 240, 640) zum Abstützen der Wendellagen radial nach außen oder radial nach innen aufweist, und
dass die Drehführung eine Leitungsführungseinrichtung (250; 550) umfasst, in welcher die Leitung entsprechend dem wendelförmigen Verlauf geführt ist und welche radial gerichtete Stützrollen (551, 552) aufweist zwecks Drehentkopplung durch Abrollen an der mindestens einen Stützhülse.

## Claims

1. A line guiding system (600) for at least one line which can be coiled and uncoiled, comprising
a drum-like winding device (602) for coiling and uncoiling at least one line (610), in particular a cable, a hose or the like, which is rotatable about an axis of rotation (A) through a shaft; and
a rotary guide (106; 206; 606) for guiding the at least one line from a first point (F) to a second point (R), which is connected to the winding device in a rotationally fixed manner and which can be rotated relative to the first point, wherein the rotary guide has a helical guiding course with one or more first helical layers (117; 257), in which the line is wound about the axis of rotation (A), one or more second helical layers (118; 258), in which the line is wound about the axis of rotation in the opposite direction, and a return curve (119; 259) which connects the two helical layers and in which the line is turned;
**characterized in that**
the rotary guide (106; 206; 606) has an outer tubular support sleeve (140; 240; 640) and/or an inner tubular support sleeve (130; 230) arranged coaxially with the axis of rotation, for supporting the helical layers radially outwards or radially inwards, and **in that** the rotary guide has a rotary decoupling structure, based on which helical layers (117; 257, 118; 258) supported on the support sleeve are rotatable about the axis of rotation (A) in a manner such that they are decoupled from the winding device (602).

2. The line guiding system according to claim 1, **characterized in that** an inner tubular support sleeve (130; 230) is provided, which for the purpose of rotary decoupling can be rotated relative to the winding device and about the axis of rotation by means of a rotational mounting.

3. The line guiding system according to claim 1 or 2, **characterized in that** an outer tubular support sleeve (140; 240) is provided, which for the purpose of rotary decoupling can be rotated relative to the winding device and about the axis of rotation by means of a rotational mounting.

4. The line guiding system according to claim 1, 2 or 3, **characterized in that** the line (110) is guided in the rotary guide in a non-enclosed manner and is supported directly on the outer or inner support sleeve (130; 140), depending on the direction of rotation.

5. The line guiding system according to one of the preceding claims, in particular according to claim 4, **characterized in that** the rotary guide comprises a support body (120; 220) for the return curve (119; 259), the support body being bent about the axis of rotation (A), with a return region (121; 221) pointing in a circumferential direction, which is adapted to the return curve, wherein the support body is freely rotatable relative to the support sleeve(s), in particular at half the rotational speed of the winding device.

6. The line guiding system according to claim 5, and in particular according to claims 2, 3 and 5, **characterized in that** the support body (120; 220) is guided between the support sleeves (130, 140; 230, 240) in an axially displaceable manner, and in particular in the manner of a sliding bearing.

7. The line guiding system according to claim 5 or 6, **characterized in that** the support body (120; 220) has a continuous sliding surface or guide rolls at least on its return region (121; 221) in order to reduce friction.

8. The line guiding system according to claim 1, 2 or 3, wherein the rotary guide comprises a line guiding device (250; 550) in which the line is guided according to the helical guiding course, **characterized in that** the line guiding device comprises support rolls (551, 552) for the purpose of rotary decoupling.

9. The line guiding system according to claim 8, **characterized in that** the line guiding device is in the form of an energy chain (550) with pivotally connected chain links, which each comprise at least an inner side link (554), an outer side link (554) and a cross-piece (550) connecting the side links, wherein for the purpose of rotary decoupling
- on at least some of the inner side links respectively a radially inwardly oriented support roll (551) is provided; and/or
- on at least some of the outer side links respectively a radially outwardly oriented support roll (552) is provided.

10. The line guiding system according to claim 9, **characterized in that** the energy chain (550) has a longer outer link strand (553) and a shorter inner link strand (553) to form the helical guiding course, wherein the outer link strand preferably has at least one intermediate piece (556) between every two pairs of pivotally connected side link parts (554A, 554B) to increase the length in a longitudinal direction.

11. The line guiding system according to one of the preceding claims, **characterized in that** the rotary guide is provided at its end regions with a first disc-shaped flange (107; 207), on which the first point (F) is arranged in a stationary manner, and with a second disc-shaped flange (108; 208; 608), which is connected in a rotationally fixed manner to the drum-like winding device (602) and on which the second point (R) is arranged, wherein the support sleeve(s) (130, 140; 230, 240; 640) can be freely rotated relative to both flanges.

12. The line guiding system according to one of the preceding claims, comprising a shaft for driving the winding device, **characterized in that** each support sleeve (130, 140; 230, 240; 640) is mounted on the shaft in a freely rotatable manner by means of a rotational mounting.

13. The line guiding system according to one of the preceding claims, comprising a line, in particular a multi-phase power cable, **characterized in that** the line (610) comprises a first section wound on the drum-like winding device (602), with a coilable and uncoilable free end (E), and a second section accommodated in the rotary guide (606) with a helical guiding course and an end that can be attached in a stationary manner to the first point (F), wherein the line is continuous and uninterrupted from the first point via the second point (R) to the coilable and uncoilable free end (E).

14. The line guiding system according to one of the preceding claims, **characterized in that** the rotary guide (606) is arranged at least partly within the drum-like winding device (602) in an axial direction or is entirely accommodated therein.

15. Use of a line guiding system according to one of claims 1 to 14 for supplying shore-side electricity to a sea-going vessel.

16. A rotary guide (106) for a line guiding system, in particular according to one of claims 1 to 14, comprising at least one line (110), which is guided in the rotary guide from a first point (F) to a second point (R) which can be relatively rotated about an axis of rotation relative to the first point, wherein the line has a helical guiding course in the rotary guide with one or more first helical layers (117), in which the line is wound about the axis of rotation, one or more second helical layers (118), in which the line is wound about the axis of rotation in the opposite direction, and therebetween a return curve (119) which connects the two helical layers and in which the line is turned;
**characterized in that**
the rotary guide has an outer tubular support sleeve (140) for supporting the helical layers radially outwards and an inner tubular support sleeve (130) for supporting the helical layers radially inwards, and
**in that** the tubular support sleeves are rotatable in a manner such that they are decoupled from the rotation of the second point (R).

17. A rotary guide (206; 606) for a line guiding system, in particular according to one of claims 1 to 14, comprising at least one line (610), which is guided in the rotary guide from a first point to a second point which can be rotated relative to the first point about an axis of rotation, wherein the line has a helical guiding course in the rotary guide with one or more first helical layers (257), in which the line is wound about the axis of rotation, one or more second helical layers (258), in which the line is wound about the axis of rotation in the opposite direction, and therebetween a return curve (259) which connects the two helical layers and in which the line is turned;
**characterized in that**
the rotary guide has at least one tubular support sleeve (230, 240, 640) for supporting the helical layers radially outwards or radially inwards, and
**in that** the rotary guide comprises a line guiding device (250; 550), in which the line is guided according to the helical guiding course and which has radially oriented support rolls (551, 552) for the purpose of rotary decoupling by rolling over the at least one support sleeve.

## Revendications

1. Système de guidage de lignes (600) pour au moins une ligne qui peut être enroulée et déroulée, le système comprenant un dispositif d'enroulement de type tambour (602) pour enrouler et dérouler au moins une ligne (610), en particulier un câble, tuyau ou similaire, pouvant tourner à l'aide d'un arbre autour d'un axe de rotation (A); et
un guide rotatif (106; 206; 606) pour guider l'au moins une ligne d'un premier point (F) à un deuxième point (R) qui est fixe en rotation sur le dispositif d'enroulement et qui peut tourner par rapport au premier point,
le guide rotatif ayant un trajectoire hélicoïdale comprenant une ou plusieurs premières parties hélicoïdales (117; 257) dans lesquelles le conduit est enroulé autour de l'axe de rotation (A), une ou plusieurs deuxièmes parties hélicoïdales (118; 258) dans lesquelles le conduit est enroulé dans un sens opposé autour de l'axe de rotation, et une courbure de changement de direction (119; 259) qui relie les parties hélicoïdales opposées et dans laquelle l'au moins une ligne a été retournée;
**caractérisé en ce que**
le guide rotatif (106; 206; 606) comprend un manchon de support tubulaire externe (140; 240; 640) et / ou un manchon de support tubulaire interne (130; 230), le manchon étant disposé coaxialement à l'axe de rotation pour supporter les parties hélicoïdales radialement vers l'extérieur respectivement radialement vers l'intérieur, et que le guide rotatif présente un découplage en rotation grâce auquel, des parties hélicoïdales (117, 257, 118, 258) qui portent sur le manchon de support sont rotatives autour de l'axe de rotation (A) de manière découplée du dispositif d'enroulement (602).

2. Système de guidage selon la revendication 1, **caractérisé en ce qu'**il est prévu un manchon de support tubulaire interne (130; 230) pouvant tourner par rapport au dispositif d'enroulement et autour de l'axe de rotation au moyen d'un roulement en vue d'un découplage en rotation.

3. Système de guidage selon la revendication 1 ou 2, **caractérisé en ce qu'**il est prévu un manchon de support tubulaire extérieur (140; 240) pouvant tourner par rapport au dispositif d'enroulement et autour de l'axe de rotation au moyen d'un roulement en vue d'un découplage en rotation.

4. Système de guidage selon la revendication 1, 2 ou 3, **caractérisé en ce que** la ligne (110) est guidée dans le guide rotatif de manière exposé et, en fonction du sens de rotation, porte directement sur le manchon de support extérieur ou intérieur (130, 140).

5. Système de guidage selon l'une des revendications précédentes, en particulier selon la revendication 4, **caractérisé en ce que** le guide rotatif comprend un corps de support (120; 220), qui est courbé autour de l'axe de rotation, (A) pour la courbure de changement de direction (119; 259), avec une région de déviation (121 ; 221) qui pointe dans une direction circonférentielle et est adapté à la courbure de changement de direction, le corps de support pouvant tourner librement par rapport au(x) manchon(s) de support, en particulier à la moitié de la vitesse de rotation du dispositif d'enroulement.

6. Système de guidage selon la revendication 5, en particulier selon les revendications 2, 3 et 5, **caractérisé en ce que** le corps de support (120; 220) situé entre les manchons de support (130, 140, 230, 240) est guidé de manière coulissante axialement, en particulier par palier lisse.

7. Système de guidage selon la revendication 5 ou 6, **caractérisé en ce que** le corps de support (120; 220) présente une surface de glissement continue ou des galets de guidage, au moins au niveau de sa région de déviation (121; 221), pour réduire le frottement.

8. Système de guidage de câble selon la revendication 1, 2 ou 3, dans lequel le guide rotatif comprend un dispositif de guidage de câble (250, 550), dans lequel l'au moins une ligne est guidée conformément à la trajectoire hélicoïdale, **caractérisé en ce que** le dispositif de guidage de câble comporte des galets de support (551, 552) destinés au découplage en rotation.

9. Système de guidage selon la revendication 8, **caractérisé en ce que** le dispositif de guidage de câbles est conçu comme une chaîne de guidage d'énergie (550) avec des maillons de chaîne reliés de manière pivotante qui comprennent chacun au moins un maillon latéral intérieur (554), un maillon latéral extérieur (554) et une âme transversale (550) reliant les maillons latéraux, dans lequel il est prévu en vue de découpler en rotation,
- au moins au niveau de certains des maillons latéraux internes un galet de support (551) dirigé radialement vers l'intérieur; et / ou
- au moins au niveau de certains des maillons latéraux extérieurs, un galet de support (552) dirigé radialement vers l'extérieur.

10. Système de guidage selon la revendication 9, **caractérisé en ce que** la chaîne de guidage d'énergie (550) en vue de former la trajectoire hélicoïdale présente un cordon de maillons extérieur plus long (553) et un cordon de maillons intérieur plus court (553), le cordon de maillons extérieur comporte au moins une pièce intermédiaire (556) pour une extension longitudinale, qui est située de préférence entre deux paires de parties de maillon latéraux reliés de manière pivotante (554A, 554B).

11. Système de guidage selon l'une des revendications précédentes, **caractérisé en ce que** l'extrémité du guide rotatif présente une première bride en forme de disque (107; 207), sur laquelle le premier point (F) est agencé de manière fixe, et une deuxième bride en forme de disque (108; 208; 608), qui est reliée de manière solidaire en rotation au dispositif d'enroulement du type tambour (602) et sur laquelle est disposé le deuxième point (R), le ou les manchon(s) de support (130, 140; 230, 240; 640) pouvant tourner librement par rapport aux deux brides.

12. Système de guidage selon l'une des revendications précédentes, comprenant un arbre d'entraînement pour le dispositif d'enroulement, **caractérisé en ce que** chaque manchon de support (130, 140; 230, 240; 640) est monté librement de manière rotative sur l'arbre au moyen d'un palier rotatif.

13. Système de guidage selon l'une des revendications précédentes, comprenant une ligne, en particulier un câble d'alimentation polyphasé, **caractérisé en ce que** la ligne (610) présente une première section enroulée sur le dispositif d'enroulement du type tambour (602), avec une extrémité libre (E) pouvant être enroulée et déroulée, et une seconde section reçue dans le guide rotatif (606) avec une trajectoire hélicoïdale et une extrémité connectable de manière fixe en position au premier point (F), la ligne allant en continu sans interruption du premier point en passant par le deuxième point (R) à l'extrémité libre (E) qui peut être enroulée et déroulée.

14. Système de guidage selon l'une des revendications précédentes, **caractérisé en ce que** le guide rotatif (606) est disposé au moins partiellement dans la direction axiale dans le dispositif d'enroulement de type tambour (602) ou y est complètement reçu.

15. Utilisation d'un système de gestion de câbles selon l'une des revendications 1 à 14 pour l'alimentation en énergie à quai d'un navire de haute mer.

16. Guide rotatif (106) pour un système de guidage de câbles, en particulier selon l'une des revendications 1 à 14, comprenant au moins une ligne (110) qui est guidée dans le guide rotatif, d'un premier point (F) à un deuxième point (R), qui par rapport au premier point peut tourner autour d'un axe de rotation, la ligne présentant dans le guide rotatif une trajectoire hélicoïdale avec une ou plusieurs premières parties hélicoïdales (117), dans laquelle la ligne est enroulée autour de l'axe de rotation, une ou plusieurs deuxièmes parties hélicoïdales (118) dans laquelle la ligne est enroulée dans le sens opposée autour de l'axe de rotation et entre ces parties une courbure de changement de direction (119; 259) qui relie les parties hélicoïdales opposées et dans laquelle l'au moins une ligne a été retournée;
**caractérisé en ce que**
le guide rotatif comprend un manchon de support tubulaire externe (140) pour supporter les parties hélicoïdales radialement vers l'extérieur et un manchon de support tubulaire interne (130) pour supporter les parties hélicoïdales radialement vers l'intérieur, et
**en ce que** les manchons de support tubulaires peuvent tourner de manière découplée du deuxième point (R).

17. Guide rotatif (206; 606) pour un système de guidage de câbles, en particulier selon l'une des revendications 1 à 14, comprenant au moins une ligne (610) qui est guidée dans le guide rotatif, d'un premier point à un deuxième point, qui par rapport au premier point peut tourner autour d'un axe de rotation, la ligne présentant dans le guide rotatif une trajectoire hélicoïdale avec une ou plusieurs premières parties hélicoïdales (257), dans laquelle la ligne est enroulée autour de l'axe de rotation, une ou plusieurs deuxièmes parties hélicoïdales (258) dans laquelle la ligne est enroulée dans le sens opposée autour de l'axe de rotation et entre ces parties une courbure de changement de direction (259) qui relie les parties hélicoïdales opposées et dans laquelle l'au moins une ligne a été retournée;
**caractérisé en ce que**
le guide rotatif comprend au moins un manchon de support tubulaire (230, 240, 640) pour supporter les parties hélicoïdales radialement vers l'extérieur ou radialement vers l'intérieur, et
**en ce que** le guide rotatif comprend un dispositif de guidage de câbles (250, 550) dans lequel la ligne est guidée suivant le parcours hélicoïdal et qui comporte des galets de support (551, 552) dirigés radialement dans le but de découpler en rotation en pouvant rouler sur l'au moins un manchon de support.
